Europäisches Patentamt

(19) European Patent Office

Office européen des brevets

(11) Publication number: **0 027 304**
**B1**

(12) EUROPEAN PATENT SPECIFICATION

(45) Date of publication of patent specification: **28.09.83**

(51) Int. Cl.³: **F 16 J 15/36, B 62 D 55/20**

(21) Application number: **80302309.2**

(22) Date of filing: **08.07.80**

(54) **Rotatable joint with face seal.**

(30) Priority: **15.10.79 PC T/US79/00844**

(43) Date of publication of application:
**22.04.81 Bulletin 81/16**

(45) Publication of the grant of the patent:
**28.09.83 Bulletin 83/39**

(84) Designated Contracting States:
**FR GB IT**

(56) References cited:
**BE - A - 529 871**
**FR - A - 2 219 711**
**US - A - 2 814 513**
**US - A - 2 881 015**
**US - A - 3 614 113**

(73) Proprietor: **CATERPILLAR TRACTOR CO.**
**100 Northeast Adams Street**
**Peoria Illinois 61629 (US)**

(72) Inventor: **Reinsma, Harold L.**
**R.R. 1**
**Dunlap Illinois 61525 (US)**

(74) Representative: **Jackson, Peter Arthur et al,**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Rotatable joint with face seal

The invention relates to rotatable joints with face seals, and in particular to a joint having a first member defining a cylindrical axially outwardly opening recess; a second member adjacent to the first member and defining a sealing surface confronting the recess, the members being associated so as to have relative rotational movement about the axis of the recess and relative movement towards and away from one another in the direction of the axis; and a sealing assembly in the recess for sealing the members, the sealing assembly comprising an annular support member having both a radially inner substantially rigid stiffener portion and a radially outer flexible connecting portion which is sealed to the one member, an annular seal formed of sealing material having high wear and abrasion resistance, the seal extending axially from the stiffener portion and defining a sealing lip which sealing engages the confronting sealing surface, and spring means at the axially inner end of the recess and acting effectively between the first member and the stiffener portion of the support member to urge the lip into continuing sealed engagement with the sealing surface notwithstanding relatively axial movement between the members.

A joint of this kind is disclosed in US—A—2,814,513 but the flexible connecting portion is a frustoconical diaphragm which is only radially compressed when the annular seal is axially displaced by engagement with the sealing surface. Since the diaphragm is axially thin, it cannot withstand, without buckling, sufficient radial compression to provide adequate fatigue resistance.

In contrast, in accordance with the invention, the flexible connecting portion comprises a flexible annular portion which, once the sealing assembly has been assembled in the recess, remains in continuous radial compression, irrespective of contact with the sealing surface.

With this construction, the connecting portion may be sufficiently compressed to provide high fatigue resistance and the spring means, acting through the stiffener portion of the support member, maintains the seal lip in contact with the confronting sealing surface, any axial movement being accommodated by the flexible connecting portion of the support member. This connecting portion, which is preferably formed of a material having high resiliency over a wide temperature range, may be statically sealed to a peripheral wall of the recess.

The connecting portion may be held in the recess by its radial compression between the stiffener portion and the one member, or may also be bonded into the recess. In one construction, however, an annular base member is received coaxially, for example press fitted, within the radially outer part of the recess and the support member connecting portion is received coaxially within the base member, radially compressed between the stiffener portion and the base member. The base member may have a radially inturned flange at the inner end of the recess, the spring means engaging the flange.

The support member connecting portion is preferably bonded to the support member stiffener portion. The seal may be formed integrally with the stiffener portion or may be bonded and/or keyed to it. For example the stiffener portion may have in axial section a radially outer head portion which is fixed to the support member connecting portion; and, extending radially inwardly from the head portion, a leg portion which is engaged on one axial side by the spring means and from the other axial side of which the seal extends. The stiffener portion may then be of substantially T-section. The leg portion may have spaced holes through which the material of the seal is moulded.

The seal will be formed integrally with or fixed to the stiffener portion, but in either case, they may present an axially inwardly and radially inwardly opening annular recess in which the spring means engages. The reaction from the spring means is then preferably applied substantially in axial alignment with the point of contact between the seal lip and the confronting surface of the second member.

The spring means preferably comprises Belleville spring means, such as an axially inner Belleville spring which takes a reaction from the first member and an axially outer Belleville spring engaging the stiffener portion, the Belleville springs contacting one another at their radially inner ends and diverging from one another radially outwardly. The spring means may be arranged to be deflected past a flat position in the range of movement between the joint members so as to provide an effectively minimised force variation in the sealing force applied under spring means to the sealing lip.

The seal assembly is simple and economical of construction but proves most efficient in practice.

In the context of the present invention, the definition of the recess as being "cylindrical" is intended to cover any recess having a substantially cylindrical outer peripheral wall and therefore covers an annular recess the inner peripheral wall of which may be provided for example by a part enabling the rotational association between the first and second members.

Three examples of joints incorporating seal assemblies constructed in accordance with the present invention are illustrated in the accompanying drawings, in which:—

Figure 1 is an axial section through one joint;

Figure 2 is an enlarged axial section through part of the seal assembly of the Figure 1 joint;

Figure 3 is a part sectional elevation of the stiffener portion of the support member of the Figure 2 seal assembly; and,

Figures 4 and 5 are views similar to Figure 2 but of second and third examples of joint.

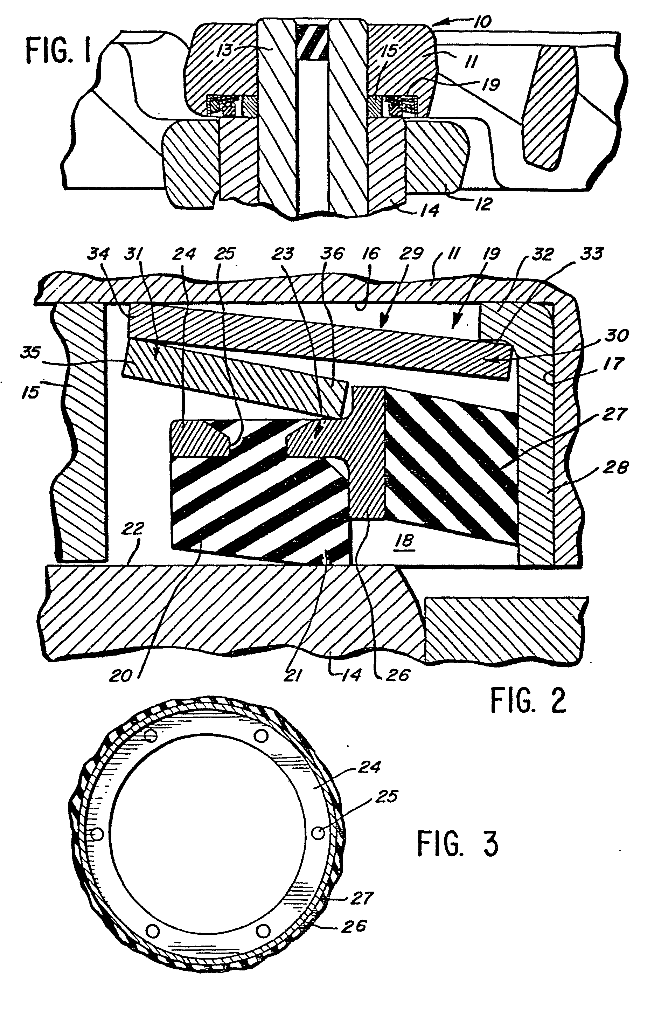

As shown in Figures 1 to 3 of the drawings, a joint 10 is shown to include a first member, herein a link 11 connected to a link 12 by a pin 13. The illustrated joint comprises a track joint, such as for use in a crawler tractor or the like.

The outer end of the pin is press-fitted in the link 11 and an inner portion of the pin is rotationally fitted in a second member, herein a bushing 14 fitted in link 12. Axial movement between the bushing 14 and link 11 is limited by a thrust ring 15 which, as shown in Figure 2, cooperates with an axially outwardly facing surface 16 and a radially outer radially inwardly facing cylindrical peripheral surface 17 of a counterbore in the link 11 to define a seal recess 18. A sealing assembly 19 is within the recess 18 effectively sealing the joint members 11 and 14 to each other notwithstanding a substantial axial movement therebetween.

More specifically, as best seen in Figure 2, the sealing assembly 19 includes a seal ring 20 having a lip portion 21 engaging a confronting sealing surface 22 of the bushing.

The seal ring is carried by an annular stiffener 23 which, as shown in Figure 2, has a T-section including a radially extending leg portion 24 having a plurality of openings 25 through which the sealing ring 20 is moulded. The seal ring 20 may be formed of any suitable highly abrasion-resistant sealable mould material, one example thereof being polyurethane.

The stiffener 23 further includes a transversely extending head portion 26 which is bonded to a flexible resilient annular connecting portion 27 in turn bonded to and compressed within a rigid annular base 28 which may be formed of a material, such as metal. The base 28 is fitted into cylindrical surface 17 of recess 18 and, in the illustrated embodiment, is press fitted thereinto so as to provide a static seal therewith.

The sealing assembly 19 further includes annular spring means generally designated 29 which, in the illustrated embodiment comprises Belleville spring means including a first axially inner spring 30 and a second axially outer spring 31 which has an outer diameter less than that of the spring 30. Outer spring 31 has a spring rate sufficiently high to force inner spring 30 past its flat deflected position as the spacing between members 11 and 14 increases, thereby providing a substantially constant spring force to the seal lip over the normal working range of the seal. The base 28 is provided with a radially inturned flange 32. The radially outer portion 33 of the spring 30 bears against the flange 22 to provide a freely movable support for the spring means 29. The radially inner portion 34 of the spring 30 engages the radially inner portion 35 of the spring 31. The radially outer portion 36 of spring 31 engages the stiffener leg portion 24 axially outwardly of lip 21 of seal ring 20 so as to provide a spring biasing force acting generally axially toward the lip portion through the stiffener and seal ring 20, as shown in Figure 2.

Stiffener portion 23, 24, 26 may be formed of a rigid material, such as metal or hard synthetic resin, so as to provide a positive transmission of spring force to the sealing ring 20 and provide an improved dynamic seal of lip 21 with the joint member surface 22.

The Belleville spring means permits substantial axial movement between joint members 14 and 11 and, thus, between surfaces 16 and 22 without substantial change in the sealing action of lip 21 against sealing surface 22. Thus, the flexible connecting portion 27 of the stiffener means assures free movement of the sealing ring 20 under the biasing action of spring means 29 over a substantial range of axial displacement of surface 22 relative to surface 16 while effectively maintaining the lip 21 stabilized at the confronting portion of sealing surface 22.

To further effectively stabilize the action of the sealing structure 19, the Belleville spring is arranged to deflect past its flat position within the range of movement of the joint members so that the variation in spring force is effectively minimized.

Referring to Figure 3, stiffener leg portion 24 may be provided with six openings 25 equiangularly spaced about the axis of the annular stiffener for improved distributed securing of the seal ring thereto.

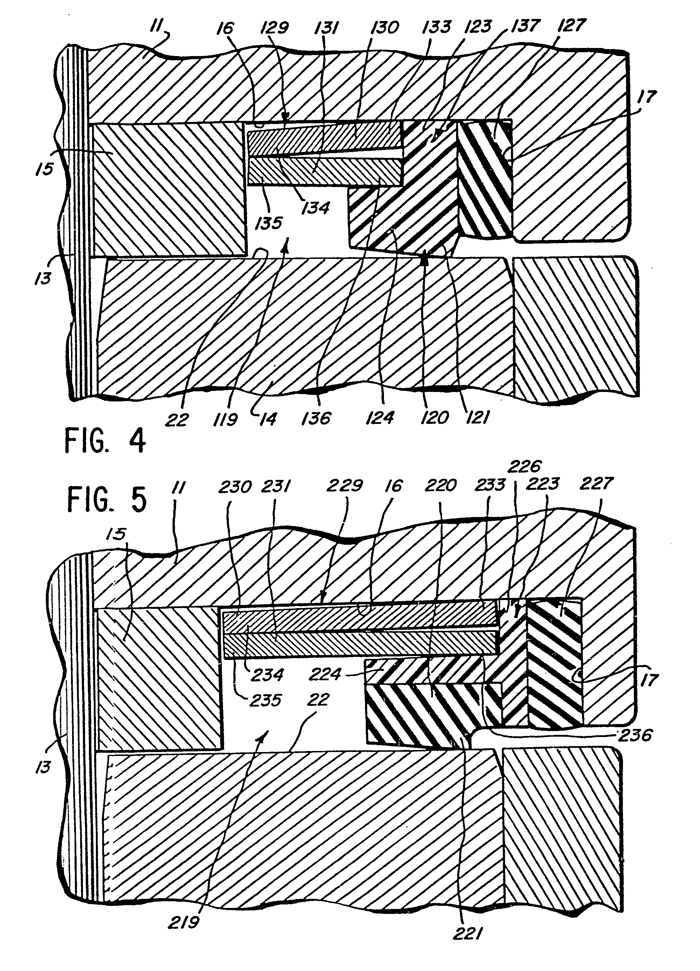

Referring now to the embodiment of Figure 4, a modified form of sealing structure generally designated 119 is shown to comprise a structure generally similar to that of sealing structure 19 but wherein the sealing ring 120 and stiffener inner portion 123 define a unitary element 137. The spring means generally designated 129 comprises a pair of Belleville springs 130 and 131 loaded in series. The springs are arranged to accommodate the axial seal travel over a relatively flat portion of the total series spring rate curve without passing the flat position. The radially outer portion 133 of spring 130 engages the joint member surface 16 and the radially outer portion 136 of the spring 131 engages a radially inner portion 124 of the element 137. Element 137 further defines a sealing lip portion 121 sealingly engaging the joint sealing surface 22 and is maintained in dynamic sealing engagement therewith by the spring means 129 acting through the element 137.

A resilient connecting portion 127 is bonded to the element 137 and is compressed within the counterbore surface 17 to provide a static seal therewith.

Thus, the sealing structure 119 provides an improved dynamic seal of lip 121 with the joint sealing surface 22 over a wide range of movement between the joint members 14 and 11 as in the embodiment of Figures 1—3 as a result of the maintained sealing force provided by spring means 129 through the stiffener and sealing element 137 to the lip portion 121 thereof with such movement being freely permitted by the flexible connecting portion 127 of the sealing structure.

In the illustrated embodiment, the element 137 is formed of an abrasion-resistant, relatively hard, high modulus, sealable synthetic resin, such as hard polyurethane. As will be obvious to those skilled in the art, other suitable materials may be utilized for the stiffener and sealing element.

A further modified form of sealing structure generally designated 219 is illustrated in Figure 5.

Sealing structure 219 is generally similar to sealing structure 19 but utilizes a T-shaped stiffener element 223 having seal ring 220 bonded thereto so as to dispose sealing lip 221 in sealing engagement with the joint member surface 22. Head portion 226 of the stiffener is bonded to a connecting portion 227 which, in turn, is received in the counterbore 17 of the link 11 so as to have a static seal therewith.

Spring means 229 may be provided in the form of a pair of annular Belleville springs 230 and 231 loaded in series and functioning in the manner previously described relative to spring means 129. The radially outer portion 233 of spring 230 engages the joint member surface 16 and the radially outer portion 236 of the spring 231 engages the leg portion 224 of the stiffener 223 generally axially outwardly of the sealing lip 221 so as to provide a maintained biasing of the sealing lip against the sealing surface 22 at all times notwithstanding a substantial axial movement between the joint member surfaces 22 and 16.

Movement of the sealing lip 221 to follow movement of the surface 22 is readily permitted by the flexible connecting portion 227 under the biasing action of the spring means. The stiffener may be formed of any suitable material, such as metal or relatively hard synthetic resin, so as to provide a positive transmission of the biasing force to the sealing lip, as discussed above.

Thus, each of the embodiments of the invention as discussed above provides an improved maintained sealing of the seal ring lip with the confronting joint sealing surface over a wide range of axial movement of that surface relative to the opposed joint member, by virtue of the stiffener for transmitting a substantially constant spring biasing force to the sealing lip and the connecting portion which permits such contant spring force to be applied to the sealing lip over a wide range of movement between the joint members.

Similar elements of each of the different embodiments are identified by similar reference numerals but 100 different.

Industrial Applicability

The sealing structure of the present invention may be utilized in a wide range of different industrial applications. In the illustrated embodiment, the sealing structure is utilized in a track joint wherein the track links are movably connected by a pin and wherein maintained lubrication is a desideratum. As will be obvious to those skilled in the art, the improved sealing structure is advantageously employed wherever an annular seal is utilized in sealing joint members having substantial relative axial movement therebetween and in an abrasive external environment.

The improved novel sealing structure of the present invention provides a number of highly desirable features in such track joint applications. More specifically, the provision of the connecting portion of the seal as a separate element permits it to be formed of a material having optimum resilience characteristics over a wide temperature range as this portion of the seal does not perform the sealing function. Reversely, as the seal ring portion of the sealing structure is divorced from any requirement for flexibly supporting the structure, it may be formed of a material having optimum and uncompromised wear and abrasion-resistance so as to define an optimum sealing element.

Still further, as the sealing structure may be formed by swaging the base element radially inwardly, the connecting portion of the sealing structure may be placed in radial compression to reduce fatigue in the operation of the sealing structure.

The sealing structure may comprise a permanently encapsulated assembly which is effectively tamper-proof as it effectively prevents unauthorized disassembly without destroying the base element configuration.

Further, the base element flange provides an improved hard wear bearing portion for the Belleville springs so as to permit controlled supported deflection of the springs in the operation of the sealing structure.

The Belleville springs may have different spring rates so as to provide improved loading characteristics in the sealing structure. Thus, the outer spring engaging the stiffener, or seal, may have a relatively high spring rate with the inner spring having a relatively lower spring rate to permit facilitated deflection past the flat position thereof in achieving the desired relatively constant load characteristics of the sealing structure.

As indicated above, the springs may be utilized alternatively to move past the flat position or reach the flat position in the maximum travel position thereof in the operation of the sealing structure. In either mode of utilization, the springs provide an improved flat load characteristic.

In the forms of construction wherein the rigid base member is not utilized, the resilient connection portion may be compressed within the joint bore in direct facial contact with the joint so as to provide an improved modified form of sealing structure as discussed above.

## Claims

1. A joint (10) having a first member (11) defining a cylindrical axially outwardly opening recess (18); a second member (14) adjacent to the first member and defining a sealing surface (22) confronting the recess, the members being associated so as to have relative rotational movement about the axis of the recess and relative movement towards and away from one another in the direction of the axis; and a sealing assembly (19, 119, 219) in the recess for sealing the members, the sealing assembly comprising an annular support member having both a radially inner substantially rigid stiffener portion (23, 123, 223) and a radially outer flexible connecting portion (27, 127, 227) which is sealed to the one member, an annular seal (20, 120, 220) formed of sealing material having high wear and abrasion resistance and formed integrally with or fixed to the stiffener portion, the seal extending axially from the stiffener portion and defining a sealing lip (21, 121, 221) which sealing engages the confronting sealing surface (22), and spring means (29, 129, 229) at the axially inner end (16) of the recess (18) and acting effectively between the first member (11) and the stiffener portion of the support member to urge the lip into continuing sealed engagement with the sealing surface notwithstanding relatively axial movement between the members; characterised in that the flexible connecting portion (27, 127, 227) comprises a flexible annular portion which, once the sealing assembly has been assembled in the recess, remains in continuous radial compression, irrespective of contact with the sealing surface (22).

2. A joint according to claim 1, wherein the connecting portion (27, 127, 227) is statically sealed against a peripheral wall (17) of the recess (18).

3. A joint according to claim 1 or claim 2, wherein a rigid annular base member (28) is received coaxially within the radially outer part (17) of the recess and the support member connecting portion (27) is received coaxially within the base member.

4. A joint according to claim 3, wherein the base member (28) has a radially inturned flange (32) at the inner end of the recess (18), the spring means (29) engaging the flange.

5. A joint according to any one of the preceding claims, wherein the support member connecting portion (27, 127, 227) is bonded to the support member stiffener portion (23, 123, 223).

6. A joint according to any one of the preceding claims, wherein the seal (120) is formed integrally with the stiffener portion (123).

7. A joint according to any one of claims 1 to 5, wherein the stiffener portion (23, 223) has in axial section, a radially outer head portion (26, 226) which is fixed to the support member connecting portion (27, 227); and, extending radially inwardly from the head portion, a leg portion (24, 224) which is engaged on one axial side by the spring means (29, 229) and from the other axial side of which the seal (20, 220) extends.

8. A joint according to claim 7, wherein the leg portion has spaced holes through which the material of the seal is moulded.

9. A joint according to any one of the preceding claims, wherein the spring means (29, 129, 229) comprises Belleville spring means.

10. A joint according to claim 9, wherein the Belleville spring means comprises an axially inner Belleville spring (30, 130, 230) which takes a reaction from the first member (11) and an axially outer Belleville spring (31, 131, 231) engaging the stiffener portion (23, 123, 223), the Belleville springs contacting one another at the radially inner ends (34, 134, 234; 35, 135, 235) thereof and diverging from one another radially outwardly.

## Patentansprüche

1. Eine Verbindung (10) mit einem ersten Glied (11), welches eine zylindrische axial nach außen gelegene Öffnungsausnehmung (18) definiert, einem zweiten Glied (14), benachbart zum ersten Glied und eine die Ausnehmung konfrontierende Abdichtoberfläche (22) definierend, wobei die Glieder derart assoziiert sind, daß sie eine relative Drehbewegung um die Achse der Ausnehmung und eine Relativbewegung zueinander hin und weg voneinander in Richtung der Achse besitzen, und mit einer Abdichtanordnung (19, 119, 219) in der Ausnehmung zur Abdichtung der Glieder, wobei die Abdichtanordnung folgendes aufweist: ein Ringtragglied mit sowohl einem radial inneren im wesentlichen starren, Versteifungsteil (23, 123, 223) als auch einem radial äußeren flexiblen Verbindungsteil (27, 127, 227), der mit dem einen Glied abgedichtet ist, eine Ringdichtung (20, 120, 220), gebildet aus Abdichtmaterial mit einem höheren Abrieb- und Abrasions-Widerstand und ausgebildet integral mit oder befestigt am Versteifungsteil, wobei sich die Abdichtung axial vom Versteifungsteil aus erstreckt und eine Abdichtlippe (21, 121, 221) definiert, die abdichtend mit der konfrontierenden Abdichtoberfläche (22) in Berührung steht, und Federmittel (29, 129, 229) am axial inneren Ende (16) der Ausnehmung (18) und in effektiver Weise zwischen dem ersten Glied (11) und dem Versteifungsteil des Tragglieds wirkend, um die Lippe in fortgesetzte abdichtende Berührung mit der Abdichtoberfläche zu drücken, und zwar trotz der relativen Axialbewegung zwischen den Gliedern, dadurch gekennzeichnet, daß der Flexible Verbindungsteil (27, 127, 227) einen flexiblen Ringteil aufweist, der, sobald die Dichtungsanordnung in der Ausnehmung zusammengebaut ist, in kontinuierlicher Radialkompression verbleibt, und zwar unabhängig vom Kontakt mit der Abdichtoberfläche (22).

2. Eine Verbindung nach Anspruch 1, wobei der Verbindungsteil (27, 127, 227) statisch abgedichtet ist gegenüber einer Umfangswand (17) der Ausnehmung (18).

3. Eine Verbindung nach Anspruch 1 oder 2, wobei ein starres Ringbasisglied (28) koaxial innerhalb des radial äußeren Teils (17) der Ausnehmung aufgenommen ist und das Traggliedverbindungsteil (27) koaxial in dem Basisglied aufgenommen ist.

4. Eine Verbindung nach Anspruch 3, wobei das Basisglied (28) einen radial nach innen gewendeten Flansch (32) am inneren Ende der Ausnehmung (18) aufweist, wobei die Federmittel (29) mit dem Flansch in Berührung stehen.

5. Eine Verbindung nach einem der vorhergehenden Ansprüche, wobei das Traggliedverbindungsteil (27, 127, 227) mit dem Traggliedversteifungsteil (23, 123, 223) des Tragglieds verbunden ist.

6. Eine Verbindung nach einem der vorhergehenden Ansprüche, wobei die Dichtung (120) integral mit dem Versteifungsteil (123) ausgeformt ist.

7. Eine Verbindung nach einem der Ansprüche 1 bis 5, wobei das Versteifungsteil (23, 223) im Axialschnitt einen radial äußeren Kopfteil (26, 226) aufweist, der am Traggliedverbindungsteil (27, 227) befestigt ist, und wobei sich radial nach innen vom Kopfteil ein Schenkelteil (24, 224) erstreckt, der auf einer Axialseite in Eingriff steht mit den Federmitteln (29, 229) und wobei sich von der anderen Axialseite aus die Dichtung (20, 220) erstreckt.

8. Eine Verbindung nach Anspruch 7, wobei der Schenkelteil mit Abstand angeordnete Löcher aufweist, durch welche das Material der Dichtung geformt wird.

9. Eine Verbindung nach einem der vorhergehenden Ansprüche, wobei die Federmittel (29, 129, 229) Belleville-Federmittel aufweisen.

10. Eine Verbindung nach Anspruch 9, wobei die Belleville-Federmittel eine axial innere Belleville-Feder (30, 130, 230) aufweist, die eine Reaktion von dem ersten Glied (11) aufnimmt, und wobei die Federmittel ferner eine axial äußere Belleville-Feder (31, 131, 231) aufweisen, die mit dem steiferen Teil (23, 123, 223) in Eingriff steht, wobei die Belleville-Federn einander an den radial inneren Enden (34, 134, 234; 35, 135, 235) kontaktieren und voneinander radial nach außen divergieren.

**Revendications**

1. Articulation (10) ayant un premier élément (11) définissant une cavité cylindrique s'ouvrant axialement vers l'extérieur (18); un second élément (14) adjacent au premier élément et définissant une surface d'étanchéité (22) en regard de la cavité, les éléments étant associés de manière à pouvoir effectuer un mouvement de rotation relatif autour de l'axe de la cavité et un mouvement relatif vers et à l'opposé l'un de l'autre dans la direction de l'axe; et un exemple d'étanchéité (19, 119, 219) dans la cavité pour rendre les éléments étanches, l'ensemble d'étanchéité comprenant un organe de support annulaire ayant à la fois une partie de raidissement radialement intérieure sensiblement rigide (23, 123, 223) et une partie de liaison radialement extérieure flexible (27, 127, 227) qui est reliée de manière étanche à l'un des éléments, un joint d'étanchéité annulaire (20, 120, 220) formé d'une matière d'étanchéité ayant une grande résistance à l'usure et à l'abrasion et faisant partie intégrante de ou fixée à la partie de raidissement, le joint s'étendant axialement de la partie de raidissement et définissant une lèvre d'étanchéité (21, 121, 221) qui s'applique de manière étanche contre la surface d'étanchéité en regard (22), et un moyen élastique (29, 129, 229) à l'extrémité axialement intérieure (16) de la cavité (18) et agissant effectivement entre le premier élément (11) et la partie de raidissement de l'organe de support pour solliciter la lèvre à s'appliquer continuellement de manière étanche contre la surface d'étanchéité nonbstant un mouvement axial relatif entre les éléments, caractérisée en ce que la partie de liaison flexible (27, 127, 227) comprend une partie annulaire flexible qui, après que l'ensemble d'étanchéité a été assemblé dans la cavité, reste en compression radiale continue, indépendamment du contact avec la surface d'étanchéité (22).

2. Articulation selon la revendication 1, dans laquelle la partie de liaison (27, 127, 227) est rendue étanche statiquement contre une paroi périphérique (17) de la cavité (18).

3. Articulation selon la revendication 1 ou la revendication 2, dans laquelle un élément de base annulaire rigide (28) et reçu coaxialement dans la partie radialement extérieure (17) de la cavité, et la partie de liaison (27) de l'organe de support est reçue coaxialement dans l'élément de base.

4. Articulation selon la revendication 3, dans laquelle l'élément de base (28) a une bordure tournée radialement vers l'intérieur (32) à l'extrémité intérieure de la cavité (18), le moyen élastique (29) s'appliquant contre cette bordure.

5. Articulation selon l'une quelconque des revendications précédentes, dans laquelle la partie de liaison de l'organe de support (27, 127, 227) est liée à la partie de raidissement (23, 123, 223) de celui-ci.

6. Articulation selon l'une quelconque des revendications précédentes, dans laquelle le joint d'étanchéité (120) fait partie intégrante de la partie de raidissement (123).

7. Articulation selon l'une quelconque des revendications 1 à 5, dans laquelle la partie de raidissement (23, 223) a en coupe axiale, une tête radialement extérieure (26, 226) qui est fixée à la partie de liaison de l'organe de support (27, 227) et, s'étendant radialement vers l'intérieur à partir de la tête, une jambe (24, 224) qui est en contact d'un côté axial avec le moyen élastique (29, 229) et de l'autre côté axial de laquelle s'étend le joint d'étanchéité (20, 220).

8. Articulation selon la revendication 7, dans laquelle la jambe a des trous espacés à travers lesquels la matière du joint d'étanchéité est moulée.

9. Articulation selon l'une quelconque des revendications précédentes, dans laquelle le moyen élastique (29, 129, 229) comprend un moyen élastique Belleville.

10. Articulation selon la revendication 9, dans laquelle le moyen élastique Belleville comprend un ressort Belleville axialement intérieur (30, 130, 230) qui reçoit une réaction du premier élément (11) et un ressort Belleville axialement extérieur (31, 131, 231) qui s'applique contre la partie de raidissement (23, 123, 223), les ressorts Belleville étant en contact l'un avec l'autre à leurs extrémités radialement intérieures (34, 134, 234; 35, 135, 235) et divergeant l'un de l'autre radialement vers l'extérieur.

FIG. I

FIG. 2

FIG. 3

FIG. 4

FIG. 5